# EUROPÄISCHE PATENTANMELDUNG

(11) **EP 1 878 953 A1**
(43) Veröffentlichungstag der Anmeldung: **16.01.2008**
(21) Anmeldenummer: 06014333.6
(22) Anmeldetag: 11.07.2006
(51) Int. Cl.: F16J 15/32

(54) **Dichtungsanordnung**

(71) Anmelder: Carl Freudenberg KG, 69469 Weinheim (DE)
(72) Erfinder: Wüstenhagen, Guido J., 21073 Hamburg (DE); Von Borstel, Dieter, 21720 Guderhandviertel (DE); Steep, Frank, 20257 Hamburg (DE)

(57) **Zusammenfassung**

Dichtungsanordnung (1), umfassend einen Gleitring (2), der an seinem Innenumfang (3) ein Maschinenelement (4) dichtend umschließt, wobei der Gleitring (2) in Richtung des Maschinenelementes (4) weisende Kanten (5, 6) aufweist, wobei eine erste Kante (5) in Richtung eines ersten Druckraums (15) und eine zweite Kante (6) in Richtung eines zweiten Druckraums (16) weist sowie einen Anpressring (7) der außenumfangsseitig an dem Gleitring (2) angeordnet ist, wobei dem Anpressring (7) eine Einrichtung (8) zugeordnet ist, welche die Anpresskraft des Anpressrings (7) in Richtung auf die erste Kante (5) leitet.

## Beschreibung

### Beschreibung

### Technisches Gebiet

Die Erfindung betrifft eine Dichtungsanordnung, umfassend einen Gleitring, der an seinem Innenumfang ein Maschinenelement dichtend umschließt, wobei der Gleitring in Richtung des Maschinenelementes weisende Kanten aufweist, wobei eine erste Kante in Richtung eines ersten Druckraums und eine zweite Kante in Richtung eines zweiten Druckraums weist sowie einen Anpressring der außenumfangsseitig an dem Gleitring angeordnet ist.

### Stand der Technik

Derartige Dichtungsanordnungen sind aus dem Bereich der Kolben- und Stangendichtungen bekannt. Die beiden beabstandet voneinander angeordneten Kanten liegen dichtend an dem abzudichtenden Maschinenelement, beispielsweise einer Stange oder einem Kolben an. Dabei soll das die Oberfläche des Maschinenelementes benetzende Betriebsmedium bei Bewegungen des Maschinenelementes in Richtung des hohen Druckes unter die zweite Kante hindurch in Richtung des Raumes mit dem hohen Druck gefördert werden. Zur Erhöhung der Initialpressung des Gleitrings ist es bekannt, in der Dichtungsanordnung einen Anpressring vorzusehen, der auf dem Außenumfang des Gleitrings anliegt. Bei hohem Betriebsdruck wird der Anpressring in Richtung der niederdruckseitigen zweiten Kante verdrängt, wodurch sich die Anpressung der zweiten Kante an das abzudichtende Maschinenelement erhöht. Dadurch kann die Rückförderung des Betriebsmediums unterbunden werden.

### Darstellung der Erfindung

Der Erfindung liegt die Aufgabe zugrunde, die Dichtungsanordnung der eingangs genannten Art derart weiterzuentwickeln, dass die niederdruckseitige Kante bei hohen Betriebsdrücken druckentlastet ist.

Diese Aufgabe wird mit den Merkmalen von Anspruch 1 gelöst. Auf vorteilhafte Ausgestaltungen nehmen die Unteransprüche Bezug.

Zur Lösung der Aufgabe ist dem Anpressring eine Einrichtung zugeordnet, welche die Anpresskraft des Anpressrings in Richtung auf die erste Kante leitet. Der erste Druckraum weist hierbei einen höheren Druck auf als der zweite Druckraum. Die Einrichtung verhindert, dass bei hohen Drücken innerhalb des ersten Druckraums der Anpressring in Richtung auf die zweite Kante verdrängt wird. Die zweite Kante ist als Extrusionskante ausgebildet, die sich mit ihrer Stirnseite an dem Gehäuse abstützt. In Richtung auf das abzudichtende Maschinenelement ist der Anpressring leicht beabstandet, so dass das Betriebsmedium in Richtung auf die erste Kante, die eigentliche Dichtkante, gefördert werden kann. Dadurch wird verhindert, dass sich an der Extrusionskante aufgrund des Kanteneffekts ein zu hoher Druckgradient auf der Oberfläche des Maschinenelementes ausbildet, der zu einer Verschlechterung der Förderwirkung der Dichtungsanordnung führt. Die Einrichtung nimmt Druckenergie auf und verringert die Kraftübertragung vom Betriebsmedium auf die zweite, niederdruckseitige Kante des Gleitrings. Wenn das Aufnahmevermögen der Einrichtung vollständig ausgenutzt worden ist, findet die Übertragung des Betriebsdruckes verspätet und abgemildert aus. Der Gleitring besteht aus einem polymeren Werkstoff, beispielweise PTFE oder einem thermoplastischen Polyurethan. Der Anpressring besteht aus einem Werkstoff der einen geringeren Elastizitätsmodul als den Gleitring aufweist. Der Anpressring kann beispielsweise aus einem elastomerem Werkstoff bestehen. Die Dichtungsanordnung ist insbesondere zur Abdichtung von Dichtstellen mit translatorischer Relativbewegung geeignet. Das sind insbesondere Dichtungen für Stangen und Kolben.

Die Einrichtung kann außenumfangsseitig an dem Gleitring angeordnet sein. Gestalt und Material der Einrichtung ist derart gewählt, dass eine Übertragung der Druckkräfte vom Betriebsmedium auf das Gleitelement möglichst lange verhindert ist. Dabei kann der Anpressring durch ein separates Bauteil gebildet sein, welches benachbart zu dem Anpressring angeordnet ist und verhindert, dass der Anpressring unter hohem Druck eine hohe Anpressung der zweiten Kante an das Maschinenelement verursacht. Bei dieser Ausgestaltung ist es erforderlich, einen Bauraum vorzusehen, der eine Verformung der Einrichtung erlaubt, ohne dass ein Kraftfluss vom Anpressring über die Einrichtung auf den Gleitring entsteht.

Die Einrichtung kann ein integrales Bauteil mit dem Anpressring bilden. Dabei ist der Anpressring so ausgebildet, dass er im Bereich der zweiten Kante eine geringere Anpressung ausübt. Bei dieser Ausgestaltung weist die Dichtungsanordnung nur eine geringe Teileanzahl auf, wodurch sich die Montage vereinfacht. Der Anpressring kann in einer Ausführung auf der der zweiten Kante zugeordneten Seite einen geringeren Elastizitätsmodul aufweisen als auf der der ersten Kante zugeordneten Seite.

Die Einrichtung kann durch eine umlaufende Ausnehmung gebildet sein, die in dem Anpressring und/oder dem Gleitring angeordnet ist und mit der zweiten Kante in Wirkverbindung steht. Bei steigender Belastung erfolgt bei dieser Ausgestaltung zunächst eine reversible Verformung im Bereich der Ausnehmung. Eine Belastung der zweiten Kante erfolgt erst, wenn der durch die Ausnehmung gebildete Raum ausgefüllt ist. Dadurch reduziert sich die Druckspannung auf die zweite Kante. Die Ausnehmung kann halbkreisförmig, halboval oder als geschlossene Ausnehmung ausgeführt sein.

Der Anpressring kann durch einen Nutring gebildet sein. Bei dieser Ausgestaltung übernimmt der Nutring die Funktion Anpressring und Einrichtung. Der Nutring besteht beispielsweise aus einem weichen thermoplastischen Polyurethan und einem einstückig mit dem Nutring verbundenen Dämpfungselement aus einem härteren Werkstoff als der Nutring. Die Nut des Rings weist in Richtung des hohen Druckes, wodurch sich der Nutring aufspreizt. Bei hohen Drücken formt sich der Nutring in Richtung auf die Niederdruckseite vollständig aus, wodurch sich eine vollflächige Belastung des Nutrings auf den Gleitring ergibt. Durch den härteren Werkstoff wird diese Wirkung in Richtung höherer Drücke verschoben.

Der Anpressring kann auf der dem Gleitring zugewandten Seite bogenförmig ausgebildet sein, wobei der Bogen asymmetrisch ausgebildet ist. Durch die asymmetrische Profilierung entsteht auf der der zweiten Kante zugeordneten Seite ein größerer Freiraum, womit bei steigendem Betriebsdruck ein verzögertes Ausformen erreicht wird.

Der Anpressring kann durch einen O-Ring gebildet sein. O-Ringe sind kostengünstig und in verschiedensten Größen und Durchmessern erhältlich. Durch den O-Ring erfolgt die Initialpressung auf den Gleitring.

Die Nut, in der die Dichtungsanordnung angeordnet ist, kann stufenartig ausgebildet sein. Die Einrichtung ist in dieser Ausgestaltung durch die stufenartige Ausbildung des Bauraums gebildet. Die Stufe verhindert eine Kraftübertragung vom Anpressring auf die zweite Kante. Dabei kann der Gleitring vollständig oder nur teilweise durch die Stufe eingefasst sein.

Eine Stirnseite der Nut kann eine Fase aufweisen, die der zweiten Kante des Gleitrings zugeordnet ist. In dieser Ausführung verläuft die Stufe gegenüber dem Maschinenelemente schräg, beispielsweise unter 45°.

Der Gleitring kann auf seinem Innenumfang eine umlaufende weitere Ausnehmung aufweisen. Die weitere Ausnehmung verbessert das Gleitvermögen des Gleitrings und verbessert die Rückförderung des Betriebsmediums.

### Kurzbeschreibung der Zeichnung

Einige Ausführungen der erfindungsgemäßen Dichtungsanordnung werden nachfolgend anhand der Figuren näher erläutert. Diese zeigen, jeweils schematisch:
Fig. 1 eine Dichtungsanordnung mit einer separaten Einrichtung;
Fig. 2 eine Dichtungsanordnung mit einem Nutring;
Fig. 3 eine Dichtungsanordnung mit einem asymmetrischen Anpresselement;
Fig. 4 eine Dichtungsanordnung in einer stufenförmigen Nut;
Fig. 5 eine Dichtungsanordnung in einer stufenförmigen Nut;
Fig. 6 eine Dichtungsanordnung in einer angefasten Nut.

### Ausführung der Erfindung

Die Figuren zeigen jeweils eine Dichtungsanordnung 1 zur Abdichtung insbesondere translatorisch bewegter Maschinenelemente 4. Dazu umfasst die Dichtungsanordnung 1 einen Gleitring 2, der an seinem Innenumfang 3 das Maschinenelement 4 dichtend umschließt. Der Gleitring 2 weist in Richtung des Maschinenelementes 4 weisende Kanten 5, 6 auf, wobei eine erste Kante 5 in Richtung eines ersten Druckraums 15 und eine zweite Kante 6 in Richtung eines zweiten Druckraums 16 weist. Dabei weist der erste Druckraum 15 einen höheren Druck auf als der zweite Druckraum 16. Die erste Kante 5 bildet die Dichtkante und die zweite Kante 6 bildet die Extrusionskante. Außenumfangsseitig an dem Gleitring 2 ist ein Anpressring 7 angeordnet. Der Gleitring 2 ist auf seinem Innenumfang 3 mit einer umlaufenden weiteren Ausnehmung 12 ausgestattet. Dem Anpressring 7 ist eine Einrichtung 8 zugeordnet, welche die Anpresskraft des Anpressrings 7 in Richtung auf die erste Kante 5 leitet. Der ersten Kante 5 ist in Richtung des ersten Druckraums 15 ein Stützbereich 17 zugeordnet. Dieser Stützbereich 17 umfasst eine umlaufende Nut 12 die mit axial in Richtung auf den ersten Druckraum 15 verlaufenden Nuten strömungsleitend verbunden ist. Der Stützbereich 17 verbessert das Gleitverhalten des Gleitrings 2 und verhindert Kippbewegungen.

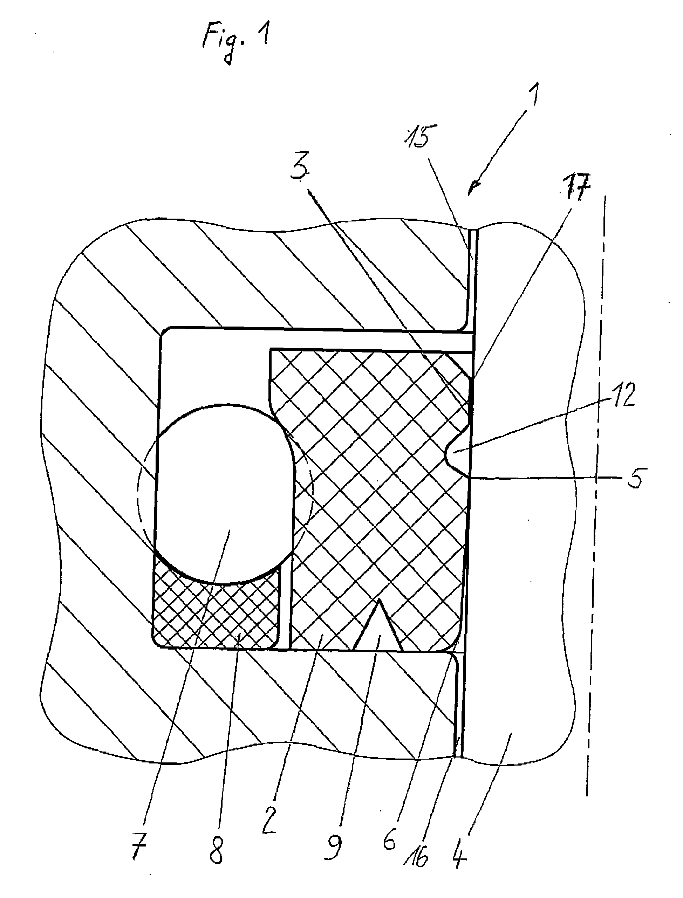

Gemäß Figur 1 ist die Einrichtung 8 außenumfangsseitig an dem Gleitring 2 angeordnet ist und besteht aus einem separaten Bauteil, welches benachbart zu dem Anpressring 7 angeordnet und der zweiten Kante 6 zugeordnet ist. Die Einrichtung 8 ist aus einem Ring gebildet, der aus einem Werkstoff mit einem höheren Elastizitätsmodul als der Anpressring besteht. Des Weiteren ist der Durchmesser der Einrichtung 8 so gewählt, dass kein Kontakt und damit keine Kraftübertragung in Richtung des Gleitrings 2 besteht. Der Anpressring 7 besteht in dieser Ausführung aus einem O-Ring. Der Gleitring 2 weist eine Ausnehmung 9 in Form einer umlaufenden weiteren Nut auf, die der zweiten Kante 6 zugeordnet ist und die eine zusätzliche Druckentlastung bewirkt.

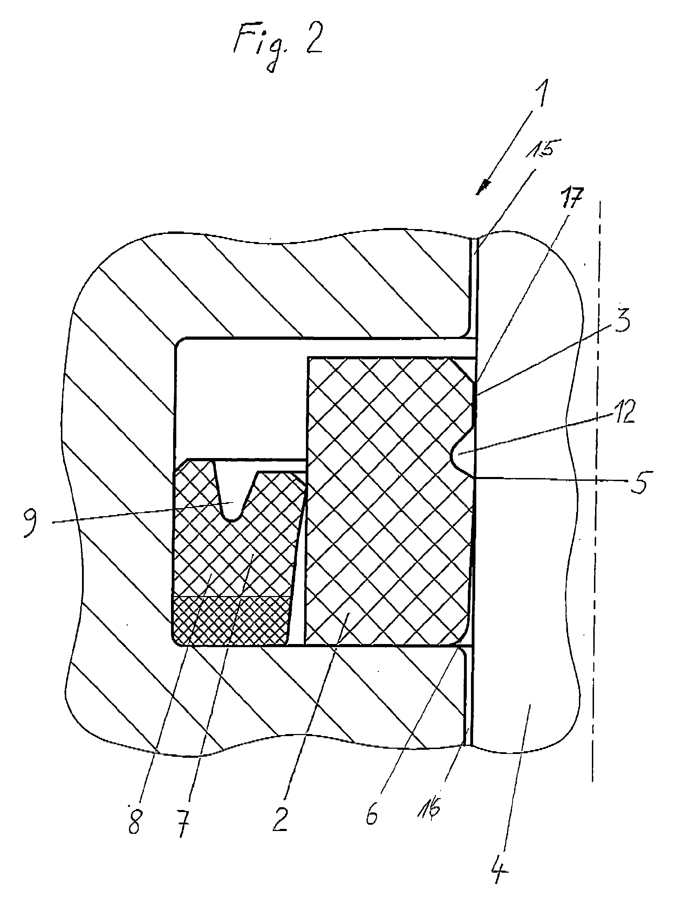

Gemäß der Ausgestaltung nach Figur 2 bildet die Einrichtung 8 ein integrales Bauteil mit dem Anpressring 7. Der Anpressring 7 ist hier durch einen Nutring gebildet und bildet gleichzeitig die Einrichtung 8. Dazu weist der Nutring eine Ausnehmung 9 auf, die in dem Anpressring 7 angeordnet ist und die mit der zweiten Kante 6 in Wirkverbindung steht.

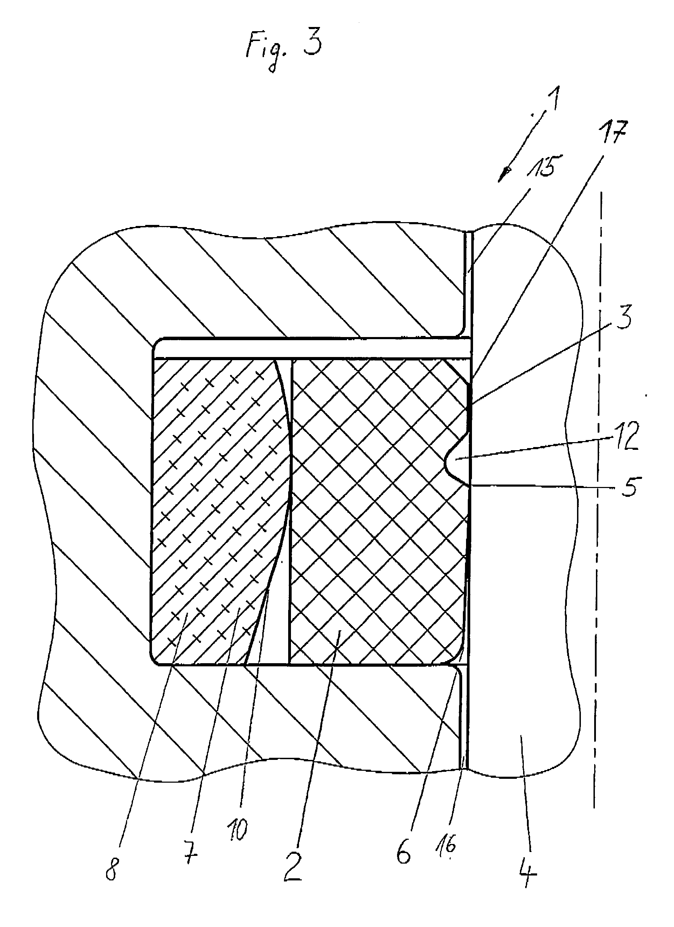

Gemäß Figur 3 bildet die Einrichtung 8 ebenfalls ein integrales Bauteil mit dem Anpressring 7. Der Anpressring 7 ist auf der dem Gleitring 2 zugewandten Seite bogenförmig ausgebildet, wobei der Bogen 10 asymmetrisch ausgebildet ist. Der Berührungspunkt des Anpressrings 7 an den Gleitring 2 ist befindet sich dabei in der Nähe der ersten Kante 5 und ist entfernt von der zweiten Kante 6.

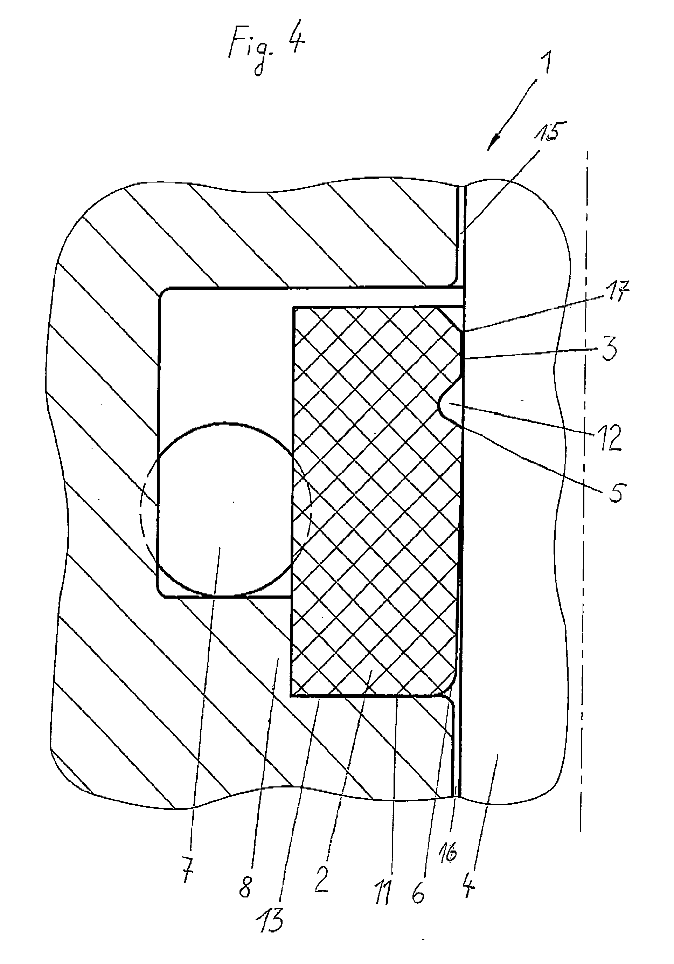

Gemäß der Figuren 4, 5 und 6 ist die Nut 11 in der die Dichtungsanordnung 1 angeordnet ist stufenartig ausgebildet.

Gemäß Figur 4 ist die Höhe der Stufe 13 so gewählt, dass der Gleitring 2 vollständig von einer Stufe 13 aufgenommen ist.

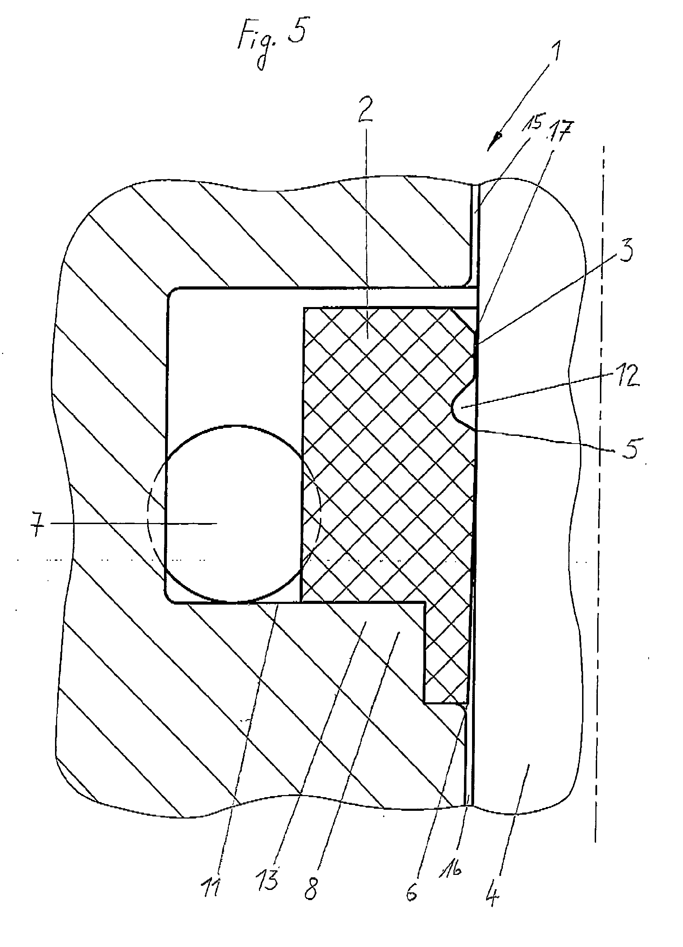

Bei der Ausführung gemäß Figur 5 ist der Gleitring 2 teilweise von einer Stufe 13 aufgenommen und weist selbst eine stufenförmige Stirnseite auf.

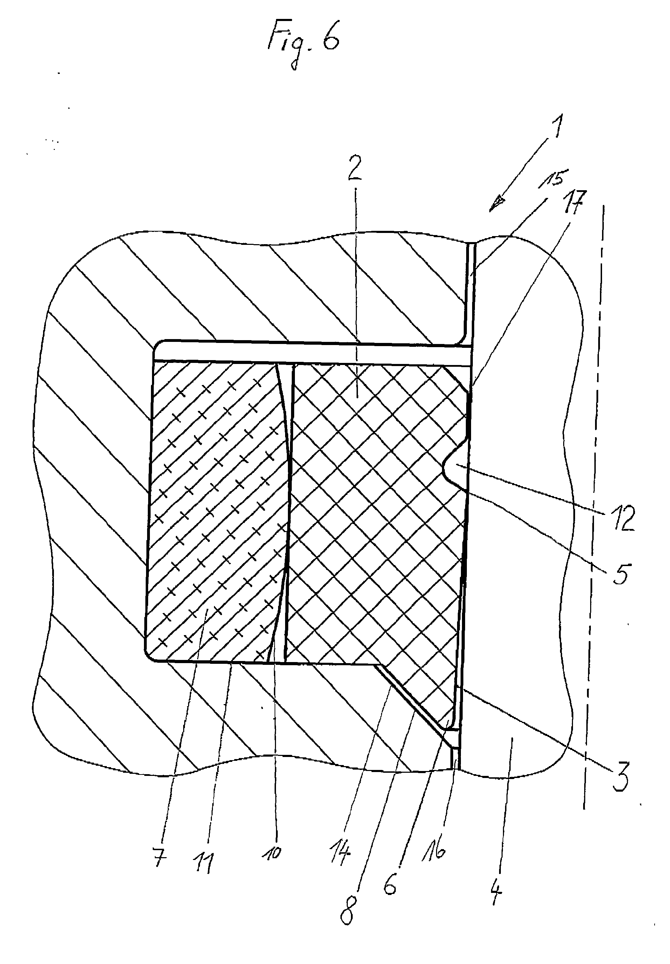

Figur 6 zeigt eine Ausgestaltung bei der eine Stirnseite der Nut 11 eine Fase 14 aufweist, die der zweiten Kante 6 des Gleitrings 2 zugeordnet ist. Das Anpresselement 7 ist bogenförmig, wobei der Bogen 10 hier symmetrisch ausgeführt ist.

## Patentansprüche

1. Dichtungsanordnung (1), umfassend einen Gleitring (2), der an seinem Innenumfang (3) ein Maschinenelement (4) dichtend umschließt, wobei der Gleitring (2) in Richtung des Maschinenelementes (4) weisende Kanten (5, 6) aufweist, wobei eine erste Kante (5) in Richtung eines ersten Druckraums (15) und eine zweite Kante (6) in Richtung eines zweiten Druckraums (16) weist sowie einen Anpressring (7) der außenumfangsseitig an dem Gleitring (2) angeordnet ist, **dadurch gekennzeichnet, dass** dem Anpressring (7) eine Einrichtung (8) zugeordnet ist, welche die Anpresskraft des Anpressrings (7) in Richtung auf die erste Kante (5) leitet.

2. Dichtungsanordnung nach Anspruch 1, **dadurch gekennzeichnet, dass** die Einrichtung (8) außenumfangsseitig an dem Gleitring (2) angeordnet ist.

3. Dichtungsanordnung nach Anspruch 1 oder 2, **dadurch gekennzeichnet, dass** die Einrichtung (8) ein integrales Bauteil mit dem Anpressring (7) bildet.

4. Dichtungsanordnung nach einem der Ansprüche 1 bis 3, **dadurch gekennzeichnet, dass** die Einrichtung (8) durch eine umlaufende Ausnehmung (9) gebildet ist, die in dem Anpressring (7) und/oder dem Gleitring (2) angeordnet ist und mit der zweiten Kante (6) in Wirkverbindung steht.

5. Dichtungsanordnung nach einem der Ansprüche 1 bis 4, **dadurch gekennzeichnet, dass** der Anpressring (7) durch einen Nutring gebildet ist.

6. Dichtungsanordnung nach einem der Ansprüche 1 bis 3, **dadurch gekennzeichnet, dass** der Anpressring (7) auf der dem Gleitring (2) zugewandten Seite bogenförmig ausgebildet ist, wobei der Bogen (10) asymmetrisch ausgebildet ist.

7. Dichtungsanordnung nach Anspruch 1 oder 2, **dadurch gekennzeichnet, dass** der Anpressring (7) durch einen O-Ring gebildet ist.

8. Dichtungsanordnung nach Anspruch 1, 2 oder 7, **dadurch gekennzeichnet, dass** die Nut (11), in der die Dichtungsanordnung (1) angeordnet ist, stufenartig ausgebildet ist.

9. Dichtungsanordnung nach Anspruch 8, **dadurch gekennzeichnet, dass** eine Stirnseite der Nut (11) eine Fase (8) aufweist, die der zweiten Kante (6) des Gleitrings (2) zugeordnet ist.

10. Dichtungsanordnung nach einem der Ansprüche 1 bis 8, **dadurch gekennzeichnet, dass** der Gleitring (2) auf seinem Innenumfang (3) eine umlaufende weitere Ausnehmung (12) aufweist.

## Geänderte Patentansprüche

### Geänderte Patentansprüche gemäss Regel 137(2) EPÜ.

**1.** Dichtungsanordnung (1), umfassend einen Gleitring (2), der an seinem Innenumfang (3) ein Maschinenelement (4) dichtend umschließt, wobei der Gleitring (2) in Richtung des Maschinenelementes (4) weisende Kanten (5, 6) aufweist, wobei eine erste Kante (5) in Richtung eines ersten Druckraums (15) und eine zweite Kante (6) in Richtung eines zweiten Druckraums (16) weist sowie einen Anpressring (7) der außenumfangsseitig an dem Gleitring (2) angeordnet ist, **dadurch gekennzeichnet, dass** dem Anpressring (7) eine Einrichtung (8) zugeordnet ist, welche die Anpresskraft des Anpressrings (7) in Richtung auf die erste Kante (5) leitet und bei hohen Drücken ein Verdrängen des Anpressrings (7) in Richtung auf die zweite Kante (6) verhindert.
